# EUROPEAN PATENT APPLICATION

(11) **EP 2 809 077 A1**
(43) Date of publication of application: **03.12.2014**
(21) Application number: 13305690.3
(22) Date of filing: 27.05.2013
(51) Int. Cl.: H04N 21/84, G11B 27/19, G06F 17/30

(54) **Method and apparatus for classification of a file**

(71) Applicant: Thomson Licensing, 92130 Issy-les-Moulineaux (FR)
(72) Inventor: Kamphenkel, Oliver, 31275 Lehrte (DE); Brune, Thomas, 30449 Hannover (DE); Freimann, Achim, 30173 Hannover (DE)
(74) Representative: Schmidt-Uhlig, Thomas

(57) **Abstract**

A method for classification of a file (13) or a part of a file (13) and an apparatus (10) configured to perform such classification are described. The file (13), i.e. a recording report, a script, or an audio/video file, is retrieved (20) via a first input (17), whereas via a second input (18) a transformation script (12) for the file (13) is obtained (21). A syntax analysis unit (11) performs a syntax analysis (22) on the file (13) or on the part of the file (13) using the transformation script (12) to generate a representation of the file (13). This representation of the file (13) is provided to a semantic analysis unit (14), which performs a semantic analysis (23) on the representation of the file (13). A structural classification (15), i.e. into scenes, shots, takes, and/or a temporal classification (16), i.e. according to time codes, resulting from the semantic analysis (23) are made available via an output (19).

## Description

### FIELD OF THE INVENTION

The invention relates to a method and to an apparatus for classification of a file or a part of a file. More specifically, a method and an apparatus are described, which allow a classification of a file or a part of a file in the temporal and the structural domain.

### BACKGROUND OF THE INVENTION

During production of digital media content a variety of files are generated, e.g. content media files and metadata files. These files generally have multiple temporal and/or structural relationships.

An example of a file with only structural information is a movie production script. Such a movie production script contains structural information about scenes and shot sequences of a movie, but generally no exploitable temporal information. In contrast, a media file of a recorded camera take only contains temporal references, i.e. information when the take has been shot, but typically no exploitable metadata with structural references. This information may be provided, for example, as the time of day and/or as SMPTE timecodes (SMPTE: Society of Motion Picture and Television Engineers). An example of a file comprising structural and temporal information is a recording report. Such a recording report contains information about when the takes of one or more shots of a scene have been shot.

Typically each file taken alone just contains a limited extent of information, which is represented in a variety of different formats. For example, a movie script may be a simple text file (doc, pdf,...), media content usually is provided as a media file (avi, mpg, mov,...) and a recording report may be a file in a markup format (sgml, xml,...). Usually dedicated interpreters are able to display the content of each file. However, to detect the inner structure of an arbitrary file and to classify it in a higher level context is very difficult. This is on the one hand due to the different representations of the files and on the other hand due to different levels of the multiple domains that the files, or parts of the files, can have relations to. For example, recording reports may either be hand-edited files or files that are automatically generated by electronic devices like cameras, clapper boards, or tablets, and corresponding applications.

It would thus be desirable to have a versatile and future proof solution for classification, ordering and linking of content and (meta-)data files in the structural and the temporal domain.

### SUMMARY OF THE INVENTION

It is an object of the invention to provide a solution for classification of a file or a part of a file in the structural and the temporal domain.

According to one aspect of the invention, a method for classification of a file or a part of a file comprises the steps of:
- retrieving the file;
- retrieving a transformation script for the file;
- performing a syntax analysis on the file or on the part of the file using the transformation script to generate a representation of the file;
- performing a semantic analysis on the representation of the file; and
- outputting a structural classification and/or a temporal classification resulting from the semantic analysis.

Accordingly, an apparatus configured to perform classification of a file or a part of a file comprises:
- a first input configured to retrieve the file;
- a second input configured to retrieve a transformation script for the file;
- a syntax analysis unit configured to perform a syntax analysis on the file or on the part of the file using the transformation script to generate a representation of the file;
- a semantic analysis unit configured to perform a semantic analysis on the representation of the file; and
- an output configured to output a structural classification and/or a temporal classification resulting from the semantic analysis.

Similarly, a computer readable storage medium has stored therein instructions enabling classification of a file or a part of a file, which when executed by a computer, cause the computer to:
- retrieve the file;
- retrieve a transformation script for the file;
- perform a syntax analysis on the file or on the part of the file using the transformation script to generate a representation of the file;
- perform a semantic analysis on the representation of the file; and
- output a structural classification and/or a temporal classification resulting from the semantic analysis.

The invention proposes to classify files or parts of files in a structural and a temporal domain. Files to be classified are, for example, data files, metadata files, or multimedia files, in a variety of formats, such as text files, a/v files, or files in a markup format. The classification depends on the information included in the content of the file. A configurable syntax analysis unit detects the type of an arbitrary file and maps the content of the file to an internal representation only containing the information for classification with the help of a transformation script. The mapping favorably uses at least one of text mapping, mapping of visual content to text, and data extraction from binary files

The classification and ordering of files or of parts of such files in a temporal and/or structural domain enables automatically detecting and building relations between files and the contained information. The configurable syntax analysis unit allows processing of multiple file formats without changing the semantic analysis unit. For each file type a transformation script maps the input file to an internal representation. Mapping the content of an input file to a reduced internal representation has the advantage that the semantic analysis unit can work on just the information needed for the classifications.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims.

### BRIEF DESCRIPTION OF THE DRAWINGS

- Fig. 1: depicts a classification unit according to the invention;
- Fig. 2: illustrates the classification of a file in the temporal and the structural domain;
- Fig. 3: depicts the classification of a file only in the structural domain;
- Fig. 4: shows the classification of a file only in the temporal domain;
- Fig. 5: schematically illustrates a method according to the invention for classification of a file; and
- Fig. 6: depicts the classification unit of Fig. 1 in more detail.

### DETAILED DESCRIPTION OF A PREFERRED EMBODIMENT

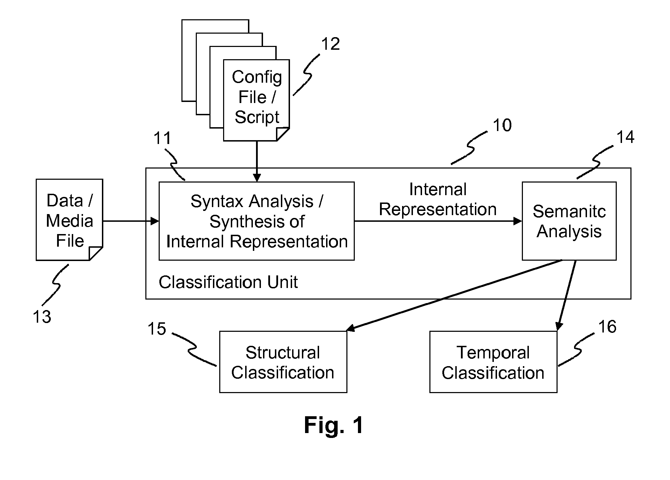

Fig. 1 depicts a classification unit 10 implementing the solution according to the present invention. In order to detect and classify the content and structure of a file a syntax analysis unit 11 applies at least one of a set of configuration files or mapping scripts 12 to a file 13, e.g. a data file, metadata file, or media file, to produce an internal representation of the file in the temporal and/or the structural domain. The content of the input file 13 is mapped to an internal representation that only contains the necessary information to classify the file 13 in the temporal and/or the structural domain. A semantic analysis unit 14 then generates a structural classification 15 and a temporal classification 16 of the content of the input file. The internal representation is produced, for example, by simple text mapping, mapping of visual content to text (OCR), data extraction from binary files, or the like. The mapping script 12 is responsible for mapping the syntax of an input file 13 to the syntax of an internal representation.

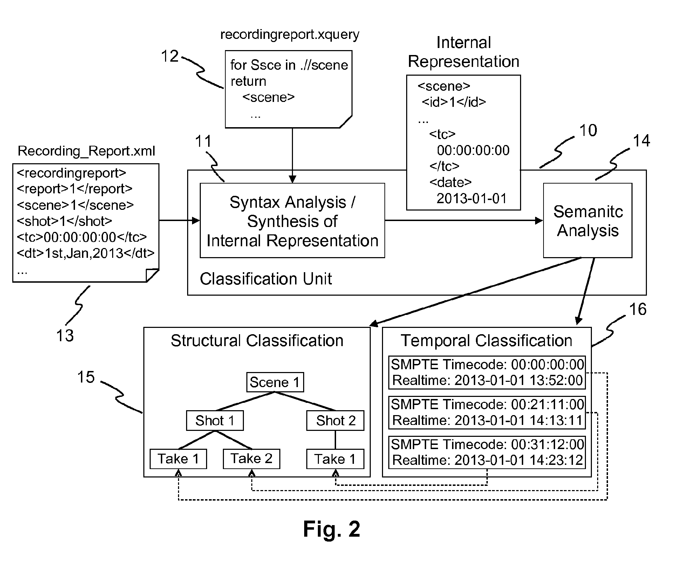

Fig. 2 explains the behavior of the classification unit 10 for the case of a file containing information related to the temporal domain as well as information related to the structural domain. In this figure the file 13 being analyzed is a recording report. The recording report is provided to the classification unit 10 as an XML-file. The syntax analysis unit 11 applies an XQuery-script to the input file 13 and produces an internal representation of the file content, which is forwarded to the semantic analysis unit 14. The semantic analysis unit 14 generates the temporal classification 16 including SMPTE timecodes and time of day, and the structural classification 15 comprising information on scenes, shots, takes, etc. The semantic analysis unit 14 further generates the appropriate mapping between these domains, as indicated by the dashed lines.

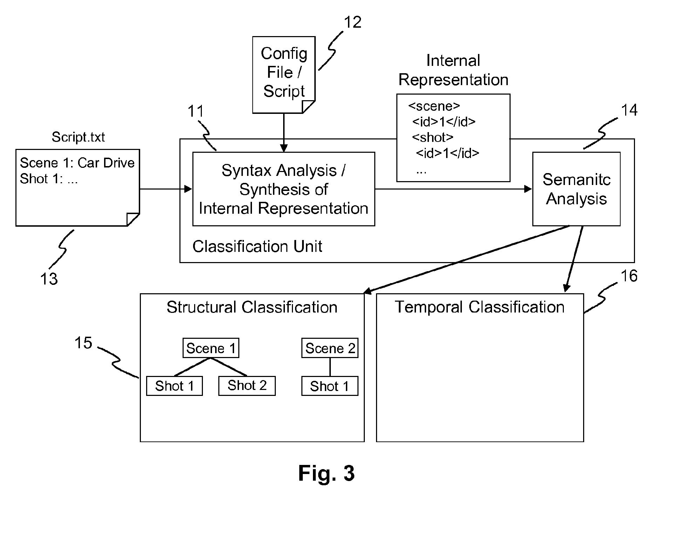

In the case of a file containing only structural information, like the production script of a movie, the classification unit 10 acts as depicted in Fig. 3. As in this case the content of the file can only be mapped to a representation 15 containing structural information, the temporal classification result is empty.

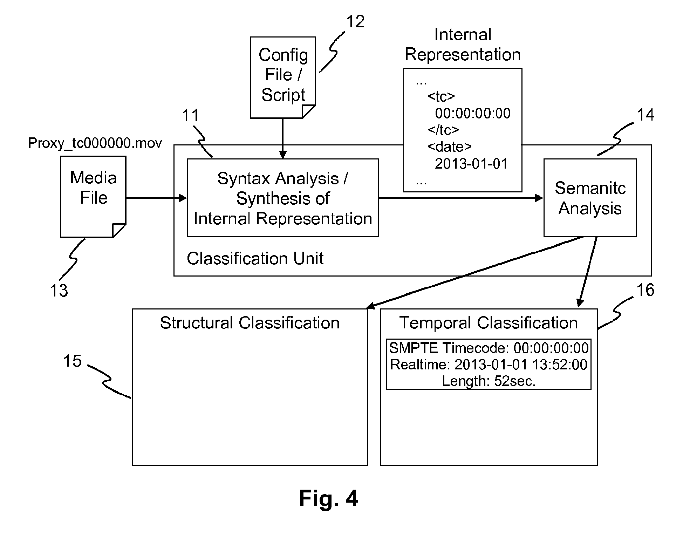

Similarly, as illustrated in Fig. 4, for a file 13 containing only information in the temporal domain, the file can only be mapped to a representation 16 containing temporal information. The structural classification result is empty.

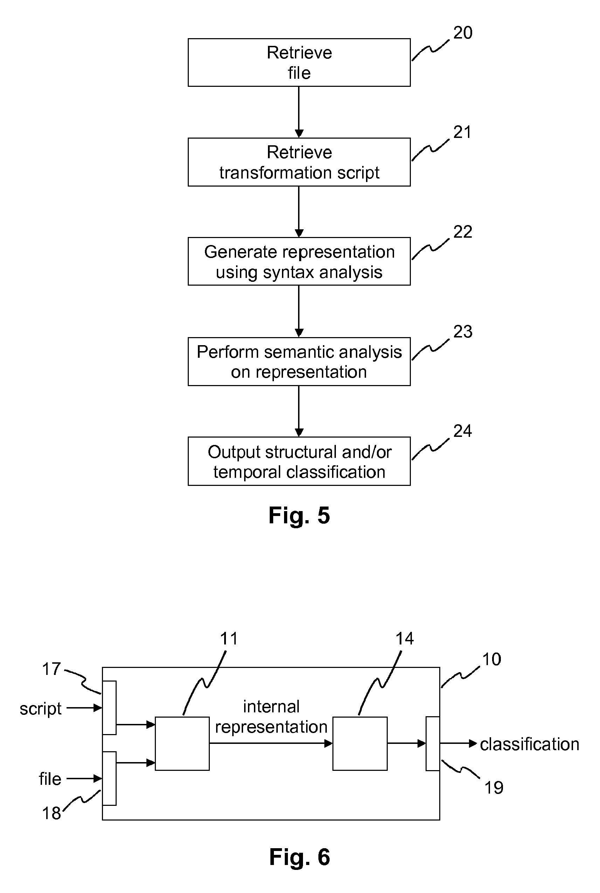

A method according to the invention for classification of a file 13 or a part of a file 13 is schematically illustrated in Fig. 5. After retrieving 20 the file 13 a transformation script 12 for the file 13 is retrieved 21, e.g. a configuration file or a mapping script. Using the transformation script 12 a syntax analysis 22 is performed on the file 13 or on the part of the file to generate a representation of the file 13. Once this representation is available, a semantic analysis 23 is performed on the representation of the file 13. Finally, a structural classification 15 and/or a temporal classification 16 resulting from the semantic analysis 23 are output 24 for further processing.

Fig. 6 depicts an apparatus 10 configured to implement the method of Fig. 5. The apparatus 10 has a first input 17 for retrieving 20 the file 13 and a second input 18 for retrieving 21 a transformation script 12 for the file 13, e.g. from a network or from a local storage. A syntax analysis unit 11 performs a syntax analysis 22 on the file 13 or on the part of the file using the transformation script 12 to generate a representation of the file 13. This representation of the file 13 is provided to a semantic analysis unit 14, which carries out a semantic analysis 23 on the representation of the file 13. A structural classification 15 and/or a temporal classification 16 resulting from the semantic analysis 23 are made available at an output 19 of the apparatus 10. Of course, the first and the second input 17, 18 may likewise be combined into a single input and/or combined with the output 19 into a bi-directional communication interface. Also, the various units of the apparatus 10 may likewise be combined or partially combined into a single unit or implemented as software running on a processor.

Although the invention has been described hereinabove with reference to a specific embodiment, it is not limited to this embodiment and no doubt further alternatives will occur to the skilled person that lie within the scope of the invention as claimed.

## Claims

1. A method for classification of a file (13) or a part of a file (13), the method **comprising** the steps of:
- retrieving (20) the file (13);
- retrieving (21) a transformation script (12) for the file (13);
- performing a syntax analysis (22) on the file (13) or on the part of the file (13) using the transformation script (12) to generate a representation of the file (13);
- performing a semantic analysis (23) on the representation of the file (13); and
- outputting (24) a structural classification (15) and/or a temporal classification (16) resulting from the semantic analysis (23).

2. The method according to claim 1, **further** comprising the step of generating a mapping between the structural classification (15) and the temporal classification (16).

3. The method according to claim 1 or 2, **wherein** the representation of the file (13) is produced by at least one of text mapping, mapping of visual content to text, and data extraction from binary files.

4. The method according to one of the preceding claims, **wherein** the file (13) comprises at least one of data, metadata, or multimedia content.

5. The method according to one of the preceding claims, **wherein** the file (13) is a text file, an a/v file, or a file in a markup format.

6. The method according to one of the preceding claims, **wherein** the structural classification (15) comprises information on scenes, shots, or takes, and the temporal classification (16) comprises timecodes or information on time of day.

7. An apparatus (10) configured to perform classification of a file (13) or a part of a file (13), the apparatus (10) **comprising:**
- a first input (17) configured to retrieve (20) the file (13);
- a second input (18) configured to retrieve (21) a transformation script (12) for the file (13);
- a syntax analysis unit (11) configured to perform a syntax analysis (22) on the file (13) or on the part of the file (13) using the transformation script (12) to generate a representation of the file (13);
- a semantic analysis unit (14) configured to perform a semantic analysis (23) on the representation of the file (13); and
- an output (19) configured to output (24) a structural classification (15) and/or a temporal classification (16) resulting from the semantic analysis (23).

8. A computer readable storage medium having stored therein instructions enabling classification of a file (13) or a part of a file (13), which when executed by a computer, cause the computer to:
- retrieve (20) the file (13);
- retrieve (21) a transformation script (12) for the file (13);
- perform a syntax analysis (22) on the file (13) or on the part of the file (13) using the transformation script (12) to generate a representation of the file (13);
- perform a semantic analysis (23) on the representation of the file (13); and
- output (24) a structural classification (15) and/or a temporal classification (16) resulting from the semantic analysis (23).
